# EUROPEAN PATENT APPLICATION

(11) **EP 2 045 738 A1**
(43) Date of publication of application: **08.04.2009**
(21) Application number: 08165832.0
(22) Date of filing: 03.10.2008
(51) Int. Cl.: G06F 17/30

(54) **Intelligently sorted search results**

(30) Priority: 05.10.2007 US 977732 P; 01.10.2008 US 243265
(71) Applicant: Fujitsu Limited, Kawasaki-shi, Kanagawa 211-8588 (JP)
(72) Inventor: Reinhardt, Albert, Albany CA 94706 (US); Marvit, David L., San Francisco CA 94121 (US); Nagahashi, Kenji, Fremont CA 94539-5796 (US); Funke, John M., San Francisco CA 94122 (US); Balakrishnan, Rajalakshmi, San Jose CA 95131 (US); Braun, Albert C., Studio City CA 91604 (US)
(74) Representative: Holtby, Christopher Lawrence

(57) **Abstract**

Intelligently sorting search results includes retrieving search results according to a search. A criterion to apply to the search results to organize the search results into clusters that present content of the search results is determined. The criterion is applied to the search results, and the search results are presented in clusters. Each cluster represents a category of the criterion applied to the search results.

## Description

### RELATED APPLICATION

This patent application claims priority from Patent Application Serial No. 60/977,732, filed October 5, 2007, entitled: GRAPHICALLY SORTING SEARCH RESULTS.

### TECHNICAL FIELD

This invention relates generally to search results, and more specifically, to intelligently sorted search results.

### BACKGROUND

A user may search through a collection of data for specific information, such as when performing a search on the World Wide Web ("Web") or a search of any other collection of documents or other forms of information. When conducting such a search, the search results presented to the user usually appear in a list form and are often ordered based on a determined relevance to the search criteria provided by the user. In certain situations, presenting the results in list form is not effective for the user to easily and efficiently evaluate the information to find the search results desired by the user. Documents of different types, from different sources, from different time periods, or concerning different issues are often mixed together. Therefore, as the user scans the list to find a result of interest, each document's entry listed in the search results must be evaluated separately.

### BRIEF DESCRIPTION OF THE DRAWINGS

For a more complete understanding of the present invention and its features and advantages, reference is now made to the following description, taken in conjunction with the accompanying drawings, in which:
FIGURE 1 illustrates one embodiment of a system that intelligently sorts search results;
FIGURE 2 illustrates an example of a graphical user interface that displays the intelligently sorted search results; and
FIGURE 3 illustrates one embodiment of a method for intelligently sorting search results.

### DETAILED DESCRIPTION OF THE DRAWINGS

### OVERVIEW

In one embodiment, intelligently sorting search results includes retrieving search results according to a search. A criterion to apply to the search results to organize the search results into clusters that present content of the search results is determined. The criterion is applied to the search results, and the search results are presented in clusters. Each cluster represents a category of the criterion applied to the search results.

### EXAMPLE EMBODIMENTS

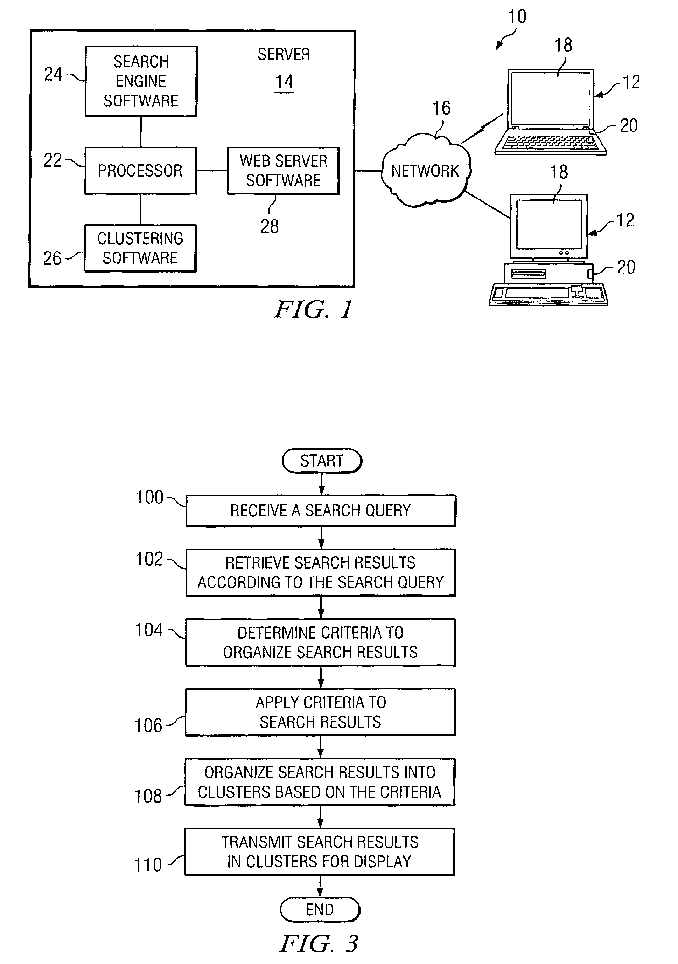

FIGURE 1 illustrates one embodiment of a system that intelligently sorts search results. Search results represent a collection of information containers and/or pointers to information containers. The search results may be documents or may incorporate information from multiple documents. A search, or search query, may represent a user-initiated search or an automatic search, and the search may cover an existing set of information or may request retrieval of a set of information. For example, a user initiates a search of a particular corpus of information, such as the Web, a particular subject matter database, or an organization's database(s). The returned results may be presented visually or audibly in an intelligent format. In an embodiment, the intelligent format represents presentation of the results in groups, or clusters, rather than in a list. The search results are separated into clusters according to any suitable criterion and presented in the separated clusters. For example, the results may be clustered according to: content type, file type, source, source type, Internet location, document category, usage, authorship, language, or any other suitable criterion. Furthermore, as an example, these various clusters may be separated graphically (i.e., on different portions of the same page) or temporally for presentation to the user.

In the illustrated embodiment, system 10 includes clients 12, a server 14, and network 16. Network 16 facilitates communication between clients 12 and server 14. A client 12 may request information from server 14, and server 14 may provide results according to the request of client 12. Server 14 facilitates presenting the search results in the intelligent format.

Client 12 represents any suitable component operable to communicate with server 14 using network 16. Client 12 may receive information according to a user input from server 14, and client 12 may provide that information from server 14 to the user. Client 12 may include a personal computer, a laptop, a wireless or cellular telephone, a personal digital assistant, or any other device suitable for communicating in system 10. In the illustrated embodiment, client 12 includes a graphical user interface ("GUI") 18 that displays information received from server 14 or network 16 to the user, and client 12 includes a web browser 20. In another embodiment, client 12 includes an audio output device, such as speakers or a headphone jack, to audibly convey search results to the user.

Web browser 20 represents an application that allows a user to interact with information located on a webpage at a website by transmitting search queries and receiving search results. As an example, web browser 20 may include Microsoft Internet Explorer ®, Mozilla Firefox ®, Apple Safari ^{™}, or Opera ®. With web browser 20, a user may initiate a search for information related to a topic by accessing a search page provided by server 14. Using search engine software 24 in server 14, the results are retrieved. When client 12 receives the results related to the search, web browser 20 displays the information to the user on GUI 18. The results are presented as clusters on GUI 18, as will be discussed below.

Server 14 represents any suitable component operable to communicate with clients 12 over network 16 and provide information to clients 12. Server 14 receives a request from client 12 and communicates information to client 12 in response to a request. Server 14 may include an e-mail server, a file server, a web server, a network server, or any other suitable device operable to service clients 12. For example, if server 14 is a web server, server 14 may receive Hypertext Transfer Protocol ("HTTP") requests for one or more webpages from clients 12 and transmit HTTP responses and data content to clients 12 according to the requests. In the illustrated embodiment, server 14 includes a processor 22, search engine software 24, clustering software 26, and web server software 28. Server 14 may include additional components, fewer components, or any suitable combination of components. For example, server 14 may represent a network server and may not include web server software 28. The functions of server 14 may be distributed among other components in system 10, and system 10 may include any suitable number of servers 14.

Processor 22 represents any suitable component operable to facilitate operation of server 14 by processing information, executing software, logic, or code, or any other suitable function. Processor 22 includes any hardware, software, or both that operate to control and process information. For example, processor 22 executes search engine software 24 to generate search results based on a searching algorithm. As another example, processor 22 executes clustering software 26 to organize the generated search results into clusters. As yet another example, processor 22 executes web server software 28 to communicate the organized search results to client 12. Processor 22 may be a programmable logic device, a microcontroller, a microprocessor, any suitable processing device, or any combination of the preceding.

Search engine software 24 represents any suitable set of instructions, logic, or code embodied in a computer-readable medium and operable to search information to generate search results according to a search query. Search engine software 24 may include any suitable searching algorithm or technology to retrieve the search results. Any suitable component within system 10 may include search engine software 24. For example, search engine software 24 may be a third party's software, such as Google ®. As another example, a server on an enterprise network may include search engine software 24 that generates search results from information available on the enterprise network. As yet another example, client 12 may include search engine software 24 that generates search results from information available on client 12.

Clustering software 26 represents any suitable set of instructions, logic, or code embodied in a computer-readable medium and operable to manipulate the search results provided to client 12 into an intelligent format. For example, clustering software 26 analyzes information and organizes the information into groups, or clusters, for display to the user. While information may be organized into a specific cluster, that information may still be included within another cluster(s) as appropriate. Clustering software 26 may facilitate evaluation and organization of the search results based on any suitable search query, such as a user-supplied search query or an automatic query. For example, a user may enter a search query into GUI 18 for search engine software 24 to search websites. The search is initiated according to the entered search query. As an example of an automatic query, a user may execute clustering software 26 to organize emails or other documents in an application based on a criterion, such as topic, author, or date. As another example, clustering software 26 my analyze information to determine the criterion to apply to the search results. Such analysis may include analysis of the search results, usage patterns, or the user. In this example, clustering software 26 may implement an algorithm to determine how to organize the search results. Clustering software 26 may facilitate evaluation and organization of any suitable collection of information, such as webpages, task lists, calendar events, documents, or any other suitable information.

Web server software 28 represents any suitable set of instructions, logic, or code embodied in a computer-readable medium and operable to communicate search results to client 12. For example, web server software 28 communicates the results as a webpage to web browser 20. In this example, web server software 28 may communicate the results using HTTP. In other embodiments, web server software 28 may communicate using File Transfer Protocol or any other suitable protocol.

Network 16 represents any suitable network operable to facilitate communication between clients 12 and server 14. Network 16 may include a private network, a public network, an enterprise network, the Internet, a local area network, a wide area network, and/or any suitable network or combination of networks operable to facilitate communication between components.

In an exemplary embodiment of operation, a user requests information from server 14 by inputting a search query on client 12. Server 14 receives the search query and executes search engine software 24 to generate search results according to the search query. Upon generating the search results, clustering software 26 analyzes the search results and organizes the results into clusters. Web server software 28 communicates the organized results to client 12. The clusters of results are displayed to the user through GUI 18 of client 12.

In another exemplary embodiment of operation, clustering software 26 is executed to facilitate organization of data without a user-supplied search query. Clustering software 26 organizes the data into clusters based on one or more criteria. A user may establish the criteria when the search is initiated or the criteria may be pre-established in clustering software 26. Search engine software 24, which is locally located on client 12, retrieves the search results. Clustering software 26 facilitates analysis of the information to determine how to group the information according to the criteria. Upon clustering software 26 organizing the data, the organized information is displayed in clusters to the user.

In any embodiment of operation, clustering software 26 may organize the search results based on any suitable one or more criteria, which may be modified. Within each group, content of the search results may be displayed. For example, the results may be grouped by content type, with separate clusters for images, text, audio, video, and other content types. Clustering software 26 may determine content type using any suitable methodology, such as document type, content, source, other forms of meta-data, and reliability. For example, content analysis may include face recognition or color distribution in images. As another example, content analysis may include genre analysis for music. As another example, the results may be grouped by file type, with separate clusters for MPEG-1 Audio Layer 3 ("MP3") files, Joint Photographic Experts Group ("JPEG") files, Graphics Interchange Format ("GIF") files, document files, text files, spreadsheets, and other types of documents. In this example, clustering software 26 may recognize the file extension to group the files according to file type. As yet another example, the results may be grouped based on file metadata, such as creation date, author, or any other suitable item of metadata. As another example, the results may be grouped based upon content analysis. Using content analysis, results may be grouped by keywords, topics, external sources of metadata, or other suitable criteria. Clustering software 26 may implement any suitable methodology to analyze the content, such as the generation of ontologies as described in **[include citations to applications related to ontologies],** which are incorporated by reference. As yet another example, the results may be grouped by source type. Several data sources may be searched and the results may be separated and presented as different categories. As another example, the results may be grouped by usage. In this example, files may be examined according to the traffic. Other possible divisions of organization include: source, language, Internet location, or other suitable criteria.

A component of system 10 may include an interface, logic, memory, and/or other suitable element. An interface receives input, sends output, processes the input and/or output, and/or performs other suitable operation. An interface may comprise hardware and/or software.

Logic performs the operation of the component, for example, logic executes instructions to generate output from input. Logic may include hardware, software, and/or other logic. Logic may be encoded in one or more tangible media and may perform operations when executed by a computer. Certain logic, such as a processor, may manage the operation of a component. Examples of a processor include one or more computers, one or more microprocessors, one or more applications, and/or other logic.

Modifications, additions, or omissions may be made to system 10 without departing from the scope of the invention. For example, client 12 may include clustering software 26 instead of or in addition to server 14 to manipulate the search results. As another example, system 10 may include any suitable number of clients 12 and server 14. The components of system 10 may be integrated or separated. Moreover, the operations of system 10 may be performed by more, fewer, or other components. Additionally, operations of system 10 may be performed using any suitable logic.

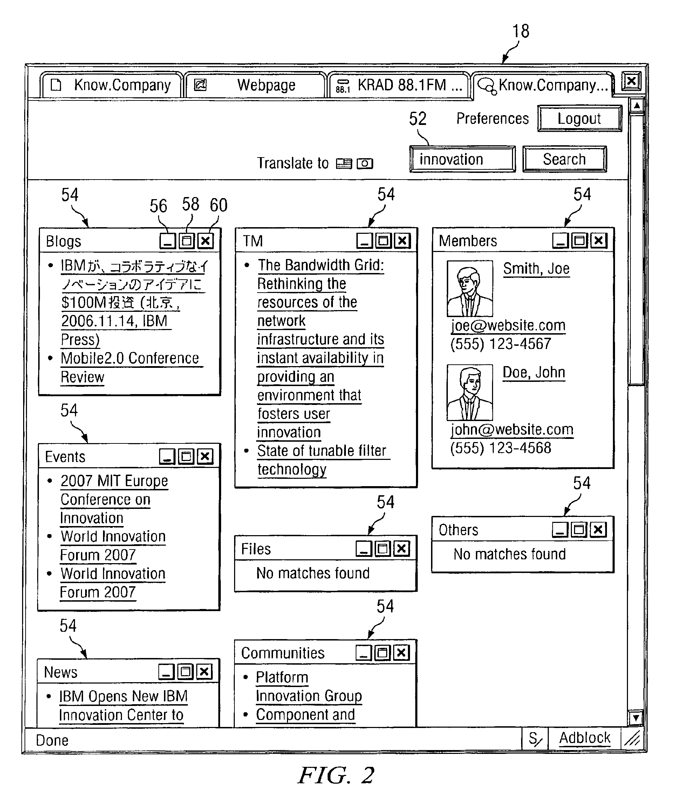

FIGURE 2 illustrates an example of a GUI 18 that displays the intelligently sorted search results.

GUI 18 may be organized in any suitable manner to display the intelligently sorted search results. In the illustrated embodiment, GUI 18 includes a search field 52 and clusters 54. A user may input a search query into search field 52 and initiate a search. Each cluster 54 displays search results associated with the search. In an embodiment, each cluster 54 represents a category of the criteria applied to the search results. For example, if the search results are grouped by file type, one cluster 54 may include the MP3 files related to a search query while another cluster 54 includes the JPEG files related to the search query. Each cluster 54 may include a link to each result in the category, a minimize icon 56, a maximize icon 58, and an exit icon 60. Minimize icon 56 allows a user to make cluster 54 smaller from its previous size, and maximize icon 58 allows a user to make cluster 54 larger from its previous size. When a cluster 54 is maximized, additional results in the category may be displayed or additional details about the results may be displayed. Exit icon 60 allows a user to remove cluster 54 from GUI 18.

GUI 18 may present the results in any suitable manner. For example, GUI 18 may display the results simultaneously. The results are gathered and may be displayed on GUI 18 when all the results are retrieved. As another example, GUI 18 may present the results asynchronously. GUI 18 may present the results as search engine software 24 retrieves information and clustering software 26 organizes the retrieved information rather than waiting for all results to be retrieved and organized. GUI 18 may allow a user to scroll between clusters 54, automate the appearance of a cluster 54 on GUI 18 and switch to another cluster 54 after a period of time, or support any suitable asynchronous presentation.

In the illustrated embodiment, a user enters the term "innovation" into search field 52 and initiates a search. As discussed in FIGURE 1, results are retrieved for the search query from server 14 using search engine software 24. Using clustering software 26, the search results are organized into categories for presentation to the user. Each category is displayed in a separate cluster 54. In the illustrated embodiment, the categories are based on source type and include a separate cluster 54 for: blogs, events, news, technical memorandum, files, communities, members, and others.

The member cluster 54 illustrates the capability of clustering software 26 to gather any suitable information from different sources and combine the information into a single result. In the illustrated embodiment, member cluster 54 displays the name, picture, email address, and phone number for each person that is determined to be associated with the "innovation" search term. When a user initiates a search, each piece of information may be retrieved from a different source. For example, server 14 may include an images database with a picture of each member and a contact database with contact information for each member. The information is gathered from the various sources, combined into a single search result, and displayed to the user in the member cluster 54.

Modifications, additions, or omissions may be made to GUI 18. For example, search field 52 and clusters 54 may be organized in any suitable manner on GUI 18. As another example, an advanced search option may be available on GUI 18 for web browser 20 to extract more relevant results. The advanced search option allows a user to enter one or more additional criteria in the search query to further limit the search results. The criteria included in the advanced search option may be applied before the search is initiated, after the search results are returned, or as a user preference.

FIGURE 3 illustrates one embodiment of a method for intelligently sorting search results. The method starts at step 100 where server 14 receives a search query from client 12. The query may include any suitable combination of word(s), wildcard(s), or other suitable criteria to facilitate a search of information. As discussed above, the search query may include one or more additional criteria from an advanced search option to further improve the relevance of the search results.

Server 14 retrieves search results according to the search query at step 102. For example, server 14 executes search engine software 24 to generate search results relevant to the search query.

At step 104, clustering software 26 determines what criteria to apply to the search results to organize the search results. The criteria may be pre-configured or may be set before the search query is initiated. Clustering software 26 applies the criteria to the search results at step 106.

Based on the criteria, clustering software 26 organizes the search results into clusters at step 108. The clusters may represent categories of the criteria used to organize the search results. At step 110, web server software 28 transmits the organized search results to client 12 for display. A user may submit another search query and the method would begin from step 100 again.

Modifications, additions, or omissions may be made to the method. For example, if the search is an automatic search that client 12 performs locally, web server software 28 may not transmit the search results to client 12. As another example, any suitable component or any suitable portions of a component may perform the steps. The method may include more, fewer, or other steps. Additionally, the steps may be performed in any suitable order.

Certain embodiments of the invention may provide one or more technical advantages. A technical advantage of one embodiment may be that search results can be sorted in an intelligent format that facilitates a user's review of the results. By displaying the results in clusters, a user may evaluate the results collectively rather than evaluating each result individually to find one of interest. Certain embodiments of the invention may include none, some, or all of the above technical advantages. One or more other technical advantages may be readily apparent to one skilled in the art from the figures, descriptions, and claims included herein.

Although the present invention has been described in several embodiments, a myriad of changes, variations, alterations, transformations, and modifications may be suggested to one skilled in the art, and it is intended that the present invention encompass such changes, variations, alterations, transformations, and modifications as fall within the scope of the appended claims.

## Claims

1. A method, comprising:
retrieving search results according to a search;
determining a criterion to apply to the search results to organize the search results into clusters that present content of the search results;
applying the criterion to the search results; and
presenting the search results in clusters, wherein each cluster represents a category of the criterion applied to the search results.

2. The method of Claim 1, wherein retrieving the search results comprises utilizing search engine software to retrieve the search results from a web server.

3. The method of Claim 1 or 2, further comprising:
accessing at least two sources to retrieve information responsive to the search; and
consolidating the information from the at least two sources into a single search result.

4. The method of any preceding claim, wherein the search is a selected one of a user-supplied search query and an automatic search query.

5. The method of Claim 4, wherein the user-supplied search query comprises one or more criteria provided in an advanced search option.

6. The method of any preceding claim, further comprising communicating the search results to a client.

7. The method of any preceding claim, further comprising graphically displaying the search results on a graphical user interface.

8. The method of Claim 7, wherein the search results are displayed asynchronously.

9. The method of any preceding claim, further comprising audibly presenting the search results.

10. The method of any preceding claim, wherein the criterion includes a selected one of content type, file type, metadata, content analysis, source type, and usage information.

11. The method of any preceding claim, wherein determining a criterion to apply to the search results comprises implementing an algorithm to analyze information for determining the criterion to apply.

12. Software embodied in one or more computer-readable media, the software when executed operable to perform the method of any preceding claim.

13. An apparatus, comprising:
a processor operable to receive a search and execute software to retrieve search results according to the search;
search engine software operable to retrieve search results according to the search; and
clustering software operable to:
determine a criterion to apply to the search results to organize the search results into clusters that present content of the search results;
apply the criterion to the search results; and
presenting the search results in clusters, wherein each cluster represents a category of the criterion applied to the search results.

14. The apparatus of Claim 13, wherein the search engine software retrieves the search results from a web server.

15. The apparatus of Claim 13 or 14, the search engine software further operable to access at least two sources to retrieve information responsive to the search; and the clustering software further operable to consolidate the information from the at least two sources into a single search result.

16. The apparatus of any of Claims 13-15, wherein the processor receives a selected one of a user-supplied search query and an automatic search query.

17. The apparatus of Claim 16, wherein the user-supplied search query comprises one or more criteria provided in an advanced search option.

18. The apparatus of any of Claims 13-17, further comprising a web server software operable to communicate the search results to a client.

19. The apparatus of Claim 18, wherein the web server software asynchronously communicates the search results.

20. The apparatus of Claim 18 or 19, wherein the web server software communicates the search results for audible presentation.

21. The apparatus of any of Claims 13-20, further comprising a graphical user interface operable to graphically display the search results.

22. The apparatus of Claim 21, wherein the search results are displayed asynchronously.

23. The apparatus of any of Claims 13-22, further comprising an audio output device operable to audibly present the search results.

24. The apparatus of any of Claims 13-23, wherein the criterion includes a selected one of content type, file type, metadata, content analysis, source type, and usage information.
